# EUROPEAN PATENT APPLICATION

(11) **EP 1 099 518 A2**
(43) Date of publication of application: **16.05.2001**
(21) Application number: 00105669.6
(22) Date of filing: 17.03.2000
(51) Int. Cl.: B25H 1/00

(54) **Low profile magnetic base drill**

(30) Priority: 12.11.1999 US 438620
(71) Applicant: Jancy Engineering Co., Davenport, Iowa 52804 (US)
(72) Inventor: Fangmann, Michael D., Blue Grass, Iowa 52756 (US); Briggs, Edward L., Goose Lake, Iowa 52760 (US); Strange, Robert E., Marco Island, Florida 33937 (US); Mc Kay, Willam C., Davenport, Iowa 52807 (US)
(74) Representative: Schaumburg, Thoenes & Thurn

(57) **Abstract**

This invention is related to a low profile magnetic base drill machine (10) in which the motor (18) is mounted side-by-side with the drill feed mechanism. The drive shaft has a splined configuration, and the tool holding mechanism has a complementary splined gear for guiding the cutting tool between its cutting and return positions as the feed mechanism is being manipulated.

## Description

### Background of the Invention

One draw back of many conventional magnetic base drill machines is that the motor that drives the cutting tool moves vertically with the tool as it progresses through a cutting stroke. This arrangement requires a relatively tall configuration that limits the minimum space in which the tool may be employed.

Examples of such prior art may be found in United States Patent No. 4,390,309 issued June 28, 1983 to Michael D. Fangmann for "Cradle Pipe Adaptor for Magnetic Drill" assigned to Jancy Engineering Company; 3,969,036 issued July 13, 1976 to Everett D. Hougen for "Magnetic Drill"; 4,261,673 issued April 14, 1981 to Everett D. Hougen for "Magnetic Base Drill"; and 5,415,503 issued May 15, 1995 assigned to Jancy Engineering Company for "Portable Drilling Machine with Internal Motor Control Cord".

United States Patent No. 4,610,580 issued September 9, 1986 to Milwaukee Electric Tool Corporation for "Drill Feed Handle" illustrates a magnetic base drill having a stationary motor located above the tool.

### Summary of the Invention

The broad purpose of the present invention is to provide an improved low profile magnetic base drill in which the motor is stationary and mounted side-by-side with the tool drive shaft. The tool drive shaft is parallel to the motor armature shaft. A gear train at the upper end of the motor shaft is drivingly connected to the upper end of the tool drive shaft. The tool drive shaft is externally splined and vertically stationary. A quill telescopically encloses the drive shaft and is internally splined so as to be guided for vertical movement by the drive shaft splines.

The cutting tool is mounted at the lower end of the quill. A quill carrier telescopically receives both the splined drive shaft and the quill and is connected to a feed shaft by a rack and gear connection such that by rotating a feed shaft handle, the tool can be raised or lowered by the user.

This arrangement provides a compact drill having a relatively small profile.

Still further objects and advantages of the invention will become apparent from the following drawings.

### Description of the Drawings

The description refers to the accompanying drawings in which like reference characters refer to like parts throughout the several views and in which:
FIGURE 1 is a perspective view showing one side of a low profile magnetic drill illustrating the preferred embodiment of the invention;
FIGURE 2 is a perspective view showing the opposite side of the drill of Figure 1;
FIGURE 3 is a partially sectional view through the preferred drill;
FIGURE 4 is an enlarged view of the feed mechanism of the preferred drill;
FIGURE 5 is a perspective view of a preferred quill carrier;
FIGURE 6 is a perspective view of a preferred splined drive shaft; and
FIGURE 7 is a perspective view of a preferred feed shaft for raising and lowering the quill carrier and the cutting tool.

### Description of the Preferred Embodiment

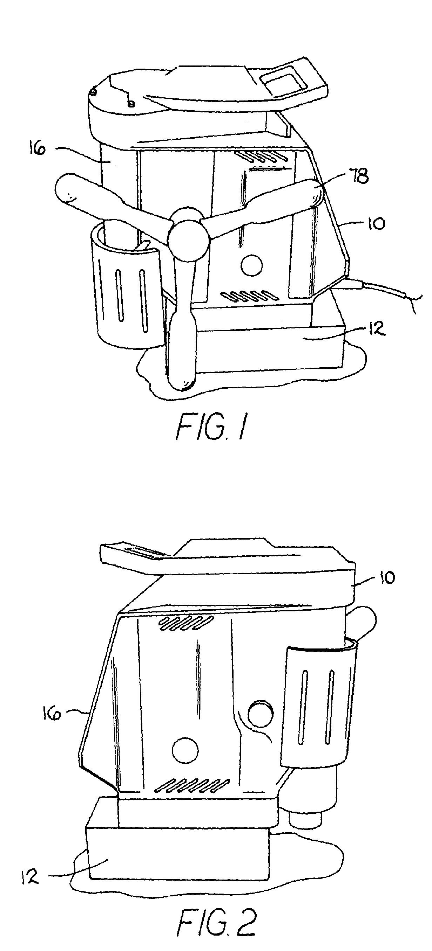

Referring to the drawings, Figures 1-3 illustrate a preferred magnetic base drill 10 having a conventional magnetic base 12 with a generally planar bottom 14.

A housing 16 is mounted on the base, and encloses an electric drill motor 18. The lower end of motor 18 is mounted on feet 20 on the drill base. Motor 18 has an armature output shaft 22, which is rotatable about an axis 24. Axis 24 is perpendicular to the plane of the bottom of base 12.

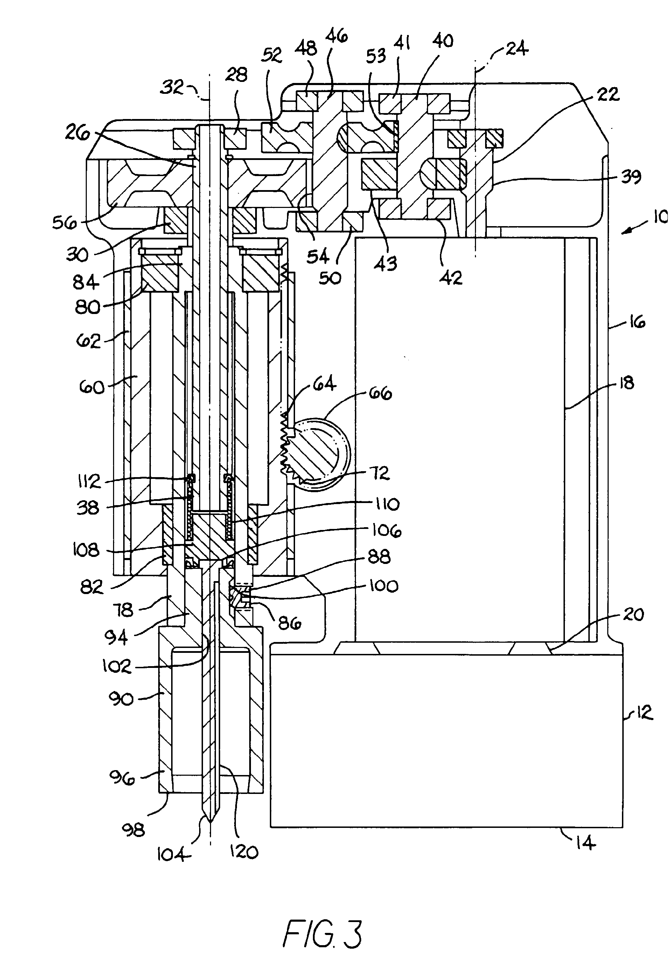

A hollow, splined drive shaft 26 is supported in a vertical position in the drill housing, as viewed in Figure 3, by a pair of bearings 28 and 30 for rotation about an axis 32 that is parallel to axis 24, and also perpendicular to the plane of the base bottom 14. Bearings 28 and 30 are mounted in housing 16.

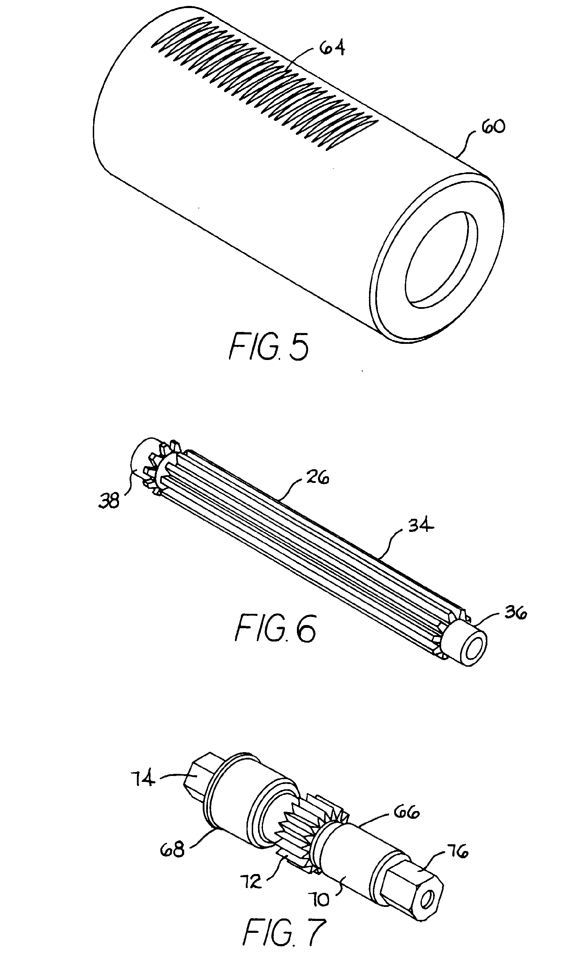

Referring to Figures 3 and 6, drive shaft 26 preferably has 10 longitudinally running, circumferentially spaced spline means 34 which terminate at their upper end with a narrow bearing section 36 which is journalled in bearing 28, and terminate at their lower end with a narrowed section 38.

Motor output shaft 22 has a gear section 39 with eight helical gear teeth. A pinion shaft 40 is journalled in bearing means 41 and 42 in the housing so as to be rotatable about an axis that is parallel to axis 24. Pinion shaft 40 supports a pinion gear 43, which is in mesh with gear section 39 on the motor shaft.

A second pinion shaft 46 is mounted by bearing means 48 and 50 so as to be rotatable about an axis that is parallel to axis 24. Pinion shaft 46 carries a pinion gear 52 that is in mesh with a gear section 53 of pinion shaft 40. Pinion shaft 46 has an integral gear section 54 which is meshed with a helical gear 56 carried on the splined drive shaft.

Thus, a gear train is formed between motor output shaft 22 and splined drive shaft 26 in such a manner that as the motor shaft is rotated about axis 24, the splined drive shaft is rotated about axis 32.

A hollow steel tubular quill carrier 60 is shown in Figures 3, 4 and 5. The quill carrier is vertically, slidably mounted in a tubular section 62 of the housing. The quill carrier has an integral external rack 64.

A feed shaft 66, shown in Figures 3, 4, and 7 has joined sections 68 and 70 journalled in bearings (not shown) in the housing so as to be rotatable about an axis that is at right angles to axis 32 of the drive shaft. The feed shaft has a pinion 72 meshed with rack 64 in such a manner that as the feed shaft is rotated in a clockwise direction, as viewed in Figure 3, the quill carrier is raised, and as the feed shaft is rotated in the opposite direction, the quill carrier is lowered.

Each of the ends 74 and 76 of the feed shaft has a hexagonal configuration for receiving a tool or a handle, such as illustrated at 78 in Figure 1, which may be mounted at either end of the feed shaft for rotating it for either raising or lowering the quill carrier.

An elongated hollow steel quill 78 is telescopically received in the quill carrier, supported by upper ball bearing means 80 and lower needle bearing means 82 in such a manner that the quill is rotatable with respect to the quill carrier. The arrangement is such that the quill carrier can move up and down depending upon the rotation of feed shaft 66, while the quill moves longitudinally along drive shaft 26 with the quill carrier but also rotates with the drive shaft. For this reason, the quill has an internally splined section 84 which is slidably, vertically mounted on the external spline means of the drive shaft. The spline means on the drive shaft guide the quill in its up and down motion.

The lower end of the quill has a pair of tapped openings 86, only one shown, receiving setscrew means 88 for releasably connecting a cutting tool 90 to the drive shaft. Cutting tool 90 is a conventional cutting tool having a hub 94 telescopically received in the lower end of the quill, and a tubular housing 96 with a series of annularly arranged teeth 98 for cutting an annular hole in a workpiece. The cutting tool has a pair of flats 100, only one shown, for seating the inner ends of the setscrews. The setscrews connect the cutting tool to the quill so that the tool rotates with the drive shaft. The cutting tool is selected according to the work that is to be performed, and is commercially available from the Jancy Engineering Company of Davenport, Iowa.

The cutting tool has a central bore 102 aligned along axis 32 of the drive shaft to slidably support an ejector pin 104. The pin extends through the lower open ends of the quill and the quill carrier. The upper end of the pin has an enlargement 106 engaged with a piston 108 that is loosely, longitudinally slidably mounted in the quill. A spring 110 is mounted between the piston and an internal shoulder 112 on the drive shaft so that the piston biases the ejector pin downwardly.

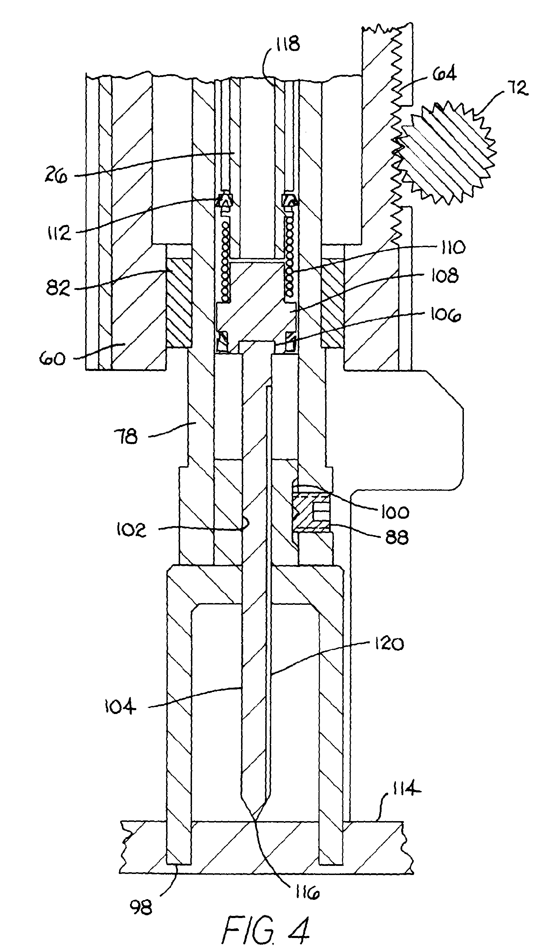

In operation, referring to Figures 3 and 4, in order to form a hole in a magnetically-attractive workpiece 114, the user places the magnetic base on the workpiece so that pilot point 116, is aligned with the center of the hole being formed. He then lowers the quill carrier with the quill and the cutting tool downwardly by rotating feed shaft 72 until the cutting tool engages the workpiece in a cutting position, forming an annular hole in the workpiece as drill motor rotates the drive shaft. The pilot point engages the workpiece and compresses spring 110 until the cutting tool has penetrated through the workpiece thereby forming a slug in the cutting tool. The spring then biases the pilot pin downwardly to eject the slug from the cutting tool.

During the cutting operation, a liquid coolant passes downwardly through bore 118, of the drive shaft, around the piston and then along a groove 120, extending along the pilot ejector pin.

Thus, it is to be understood that we have described an improved low profile magnetic base drilling machine in which the motor is mounted alongside the mechanism that raises and lowers the cutting tool. We have described a novel structure for precisely raising and lowering the cutting tool along the splined drive shaft.

## Claims

1. A magnetic base drill unit, comprising:
a frame having a magnetic planar base for causing the drill unit to be magnetically adhered to a workpiece;
a rotatable cutting tool, and feed means mounted on the base for advancing the cutting tool along a first axis of motion generally normal to the plane of the base;
a drill motor mounted on said base adjacent and side-by-side with the feed means, the drill motor having an output shaft rotatable about a second axis parallel to and spaced from said first axis; and
power transfer means for connecting the motor output shaft to the cutting tool for rotating said cutting tool in a cutting motion.

2. A magnetic base drill as defined in claim 1, in which the power transfer means includes a gear train having a first gear connected to the motor output shaft, a drive shaft carrying the cutting tool, and a second gear connected to the drive shaft and drivingly meshed with the first gear.

3. An electrical portable drilling machine, comprising:
a base;
motor means mounted on said base including a rotatable output shaft;
a drive shaft mounted on said base and having an axis of rotation;
the drive shaft having an annular series of external linear splines parallel to the axis of the drive shaft;
an elongated tubular quill telescopically mounted on the drive shaft, the quill having internal spline means mated with the external splines of the drive shaft such that the quill is movable along the axis of the drive shaft guided by the mating splines, between a raised return position and a lower cutting position;
a cutting tool carried on a quill so as to be either lowered or raised between the cutting and return positions; and
means for raising and lowering the quill and the cutting tool between said cutting positions and said return positions.

4. An electrical portable drilling machine as defined in claim 3, in which the means for raising and lowering the quill comprises a quill carrier telescopically receiving the quill such that the quill and the quill carrier are rotatable with respect to one another, and the quill and the quill carrier are movable as a unit along the axis of the drive shaft, rack means formed on the quill carrier and a feed shaft having pinion means engaged with the rack such that as the feed shaft is rotated, the rack and pinion means raise or lower the quill carrier.

5. A drilling machine as defined in claim 4, in which the feed shaft is elongated having hexagonal ends mounted, and including a removable handle mounted on at least one of said ends of the feed shaft.
